# EUROPEAN PATENT SPECIFICATION

(11) **EP 2 015 512 B1**
(45) Date of publication and mention of the grant of the patent: **07.07.2010**
(21) Application number: 07720564.9
(22) Date of filing: 27.03.2007
(51) Int. Cl.: H04L 12/26

(54) **A METHOD AND A SYSTEM FOR DETECTING AND REPORTING THE FAILURE OF THE DATA TRANSMISSION DEVICE**
VERFAHREN UND SYSTEM ZUM ERKENNEN UND MELDEN DES AUSFALLS DER DATENÜBERTRAGUNGSEINRICHTUNG
PROCÉDÉ ET SYSTÈME PERMETTANT DE DÉTECTER UNE PANNE DANS UN DISPOSITIF DE TRANSMISSION DE DONNÉES ET D'EN RENDRE COMPTE

(30) Priority: 27.03.2006 CN 200610067409
(43) Date of publication of application: 14.01.2009
(73) Proprietor: Huawei Technologies Co., Ltd., Longgang District, Shenzhen Guangdong 518129 (CN)
(72) Inventor: LI, Yong, Guangdong 518129 (CN); HU, Zhengchao, Guangdong 518129 (CN); DONG, Enchang, Guangdong 518129 (CN); TANG, Zhenyu, Guangdong 518129 (CN)
(74) Representative: Pfenning, Meinig & Partner GbR
(86) International application number: PCT/CN2007/000990
(87) International publication number: WO 2007/109998

(56) References cited:
- JP-A- 09 128 015
- US-A1- 2002 003 778
- US-A1- 2004 153 835
- US-B1- 6 816 461
- US-B2- 6 487 173

## Description

This application claims priority to the Chinese Patent Application, the publication No. in China is 1852127, filed with the Chinese Patent Office on March 27, 2006 and entitled "Method for Detecting and Reporting Faults of Data Transmission Equipment".

### FIELD OF THE INVENTION

The present invention relates to the network operation and maintenance field, and in particular, to a method and a system for detecting and reporting faults of data transmission equipment.

### BACKGROUND

During researches and applications, it is discovered that the prior art has weakness as described hereinafter.

US application of No. 2004/153835 discloses an automated kernel software outage measurement and classification in order to automatically distinguish operations related to software outage events. System failures are categorized into software-caused failures and hardware-caused failures. Software failures are further classified as unplanned outages and operational outages. The operational outages are then classified as unplanned operational outages and planned operational outages. The failures for the different categories are then automatically measured. In the prior art, the network transmission of network equipment is vulnerable to interruption due to link failure or power failure. Network equipment generally has a dedicated channel for data interaction with the Network Management System (NMS) or has the function of transmitting interaction information through traffic overhead, thus implementing network management and monitoring.

However, once the network fails, it is usually difficult to know whether the network failure is caused by power failure, equipment failure or link failure. Link failure includes fiber cut and coax cable fault.

In order to locate the fault quickly and recover the communication effectively, and prevent the network maintainers from regarding mistakenly power failure as equipment failure or cable fault, it is required to identify power failure effectively and, provide accurate and rich equipment maintenance information to the equipment users.

For example, a piece of equipment is installed tens of kilometers away, and is connected with the local equipment through fibers. Without additional communication means, it is impossible to know whether the remote equipment is power off or not. When the remote equipment powers off, the local equipment can detect signal loss, but is unable to know whether the signal loss is caused by fiber cut or equipment power failure, or to obtain the information about equipment power failure.

In order to obtain the information about power failure of the remote equipment, the prior art uses a dedicated power detection device and a dedicated auxiliary communication circuit, both relying on a standby power supply (such as battery) to work. The solution provided by the prior art requires additional auxiliary communication means, brings higher costs and is unable to be integrated with the NMS of the communication equipment.

### SUMMARY

A method and a system for detecting and reporting faults of data transmission equipment provided in an embodiment of the present invention can detect the fault causes of the network equipment and report in real time, so that the NMS can handle the network equipment faults during the data transmission timely and accurately.

An embodiment of the present invention provides a method for detecting and reporting faults of data transmission equipment, including:
detecting the fault causes of the local data transmission equipment by a local data transmission equipment;
   sending the detected fault causes and the important state information of the local data transmission equipment to the peer data transmission equipment by the local data transmission equipment; wherein
   when detecting voltage fall, by the local data transmission equipment 102, 402, sending the detected fault causes and the important state information of the local data transmission equipment 102, 402 to the peer data transmission equipment 104, 404 before failure of normal working of the local data transmission equipment 102, 402; wherein sending the detected fault causes and the important state information of the local data transmission equipment to the peer data transmission equipment further comprises: adding the fault causes and important state information into the payload, which will be sent to the peer data transmission equipment; and
   identifying, by the peer data transmission equipment 104, 404, the received fault causes and important state information and reporting by the peer data transmission equipment 104, 404, the identifed fault causes and the important state information of the local data transmission equipment 102, 402 to a Network Management System, NMS.

An embodiment of the present invention further provides a data transmission equipment, including:
a fault cause detecting module, adapted to detect the fault causes of the data transmission equipment; and
a fault cause sending module, adapted to send the detected fault causes and the important state information of the data transmission equipment to a peer data transmission equipment; wherein
when the fault cause detecting module detects voltage fall, the fault cause sending module is further adapted to send the detected fault causes and the important state information of the data transmission equipment to the peer data transmission equipment before failure of normal working of the data transmission equipment; wherein the input side of the fault cause sending module further inputs the payload transmitted to the peer data transmission equipment, and the fault cause sending module adds the fault causes and important state information into the payload which will be sent to the peer data transmission equipment.

An embodiment of the present invention as defined in the dependent claims show the following features:
a peer fault cause identifying module, adapted to identify the received fault causes and important state information of the peer data transmission equipment; and
a reporting module, adapted to report the identified fault causes and important state information of the peer data transmission equipment to the NMS.

An embodiment of the present invention is further provides a system for detecting and reporting faults of data transmission equipment. The system includes the data transmission equipment stated above and further includes:
a second data transmission equipment, adapted to identify the received fault causes and the important state information of the first data transmission equipment and report them to the NMS.

In the present invention, the local data transmission equipment detects its own fault causes, and sends the detected fault causes and important state information of the local data transmission equipment to the peer end, thus overcoming the trouble of using an additional detection device to detect the fault causes in the prior art. Without auxiliary communication means, the maintainers can know the information about faults of the peer communication equipment, thus improving maintainability of the communication equipment.

The fault causes are not reported to the NMS directly, but through the peer data transmission equipment. As a result, the reporting is fast, and the NMS can handle the network equipment faults during the data transmission timely and accurately. Moreover, since the fault causes are not reported to the NMS directly, the channel of transmitting messages can be selected at discretion. It is appropriate to select the dedicated data link for transmitting NMS messages (for example, transmitting DCC bytes of the MSTP equipment), or select the data link previously used for data transmission (for example, transmitting various payloads of the MSTP equipment such as VC4, VC3, and VC12).

### BRIEF DESCRIPTION OF THE DRAWINGS

Figure 1 shows the structure of a system for detecting and reporting faults of data transmission equipment in which the fault causes are transmitted through a normal data transmitting/receiving port according to an embodiment of the present invention.

Figure 2 shows the structure of a system for detecting and reporting faults of data transmission equipment in which the fault causes are transmitted through a dedicated port according to an embodiment of the present invention.

Figure 3 shows a flowchart of a method for detecting and reporting faults of data transmission equipment according to an embodiment of the present invention.

Figure 4 shows the structure of a system for detecting and reporting faults of data transmission equipment in which the fault causes (power failure) are transmitted through a normal data transmitting/receiving port according to an embodiment of the present invention.

Figure 5 shows the structure of a system for detecting and reporting faults of data transmission equipment in which the fault causes (power failure) are transmitted through a dedicated port according to an embodiment of the present invention.

Figure 6 shows the time sequence from detecting voltage fall to main voltage failure of the system according to an embodiment of the present invention.

Figure 7 shows the structure of a system for detecting and reporting faults of data transmission equipment in an Ethernet according to an embodiment of the present invention.

### DETAILED DESCRIPTION

The accompanying drawings are intended for better understanding of the present invention and constitute part of this application. The exemplary embodiments of the present invention and description about them are intended for interpreting the present invention rather than limiting the present invention. The present invention is hereinafter described in detail with reference to accompanying drawings.

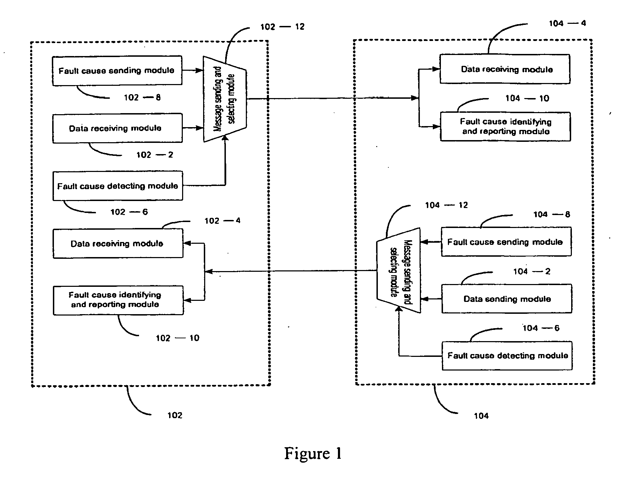

Figure 1 shows the structure of a system for detecting and reporting faults of data transmission equipment in which the fault causes are transmitted through a normal data transmitting/receiving port according to an embodiment of the present invention.

As shown in Figure 1, in this embodiment of the present invention, the local data transmission equipment 102 includes a data transmitting module 102-2 and a data receiving module 102-4, and further includes:
a fault cause detecting module 102-6, adapted to detect the fault causes of the local data transmission equipment;
a fault cause sending module 102-8, adapted to share a port with the data sending module 102-2 when a fault cause is detected, make a selection through the message sending selection module 102-12, and send the detected fault causes and important state information of the local data transmission equipment to the peer data transmission equipment through fibers, cables or RF; and
a fault cause identifying and reporting module, adapted to identify the fault causes and important state information from the peer data transmission equipment, and report the identified fault causes and important state information of the peer data transmission equipment to the NMS.

Likewise, in this embodiment of the present invention, the peer data transmission equipment 104 includes a data transmitting module 104-2 and a data receiving module 104-4, and further includes:
a fault cause detecting module 104-6, adapted to detect the fault causes of the data transmission equipment;
a fault cause sending module 104-8, adapted to share a port with the data sending module 104-2 when a fault cause is detected, make a selection through the message sending selection module 104-12, and send the detected fault causes and important state information of data transmission equipment to the local data transmission equipment through fibers, cables or RF; and
a fault cause identifying and reporting module 104-10, adapted to identify the fault causes and important state information from the local data transmission equipment, and report the identified fault causes and important state information of the local data transmission equipment to the NMS.

The fault cause sending module keeps normal work through an energy conservation component or a standby power supply of the data transmission equipment. Before failure of working normally, the fault cause sending module sends out the fault causes and important state information completely. The fault cause sending module can send fault causes and important state information through a normal data transmitting port or a dedicated port of the data transmission equipment.

The fault cause sending module can send fault causes and important state information in at least one of the following modes:
sending fault causes and important state information through an operation management and maintenance channel; and
adding the fault causes and important state information into the payload, which will be transmitted to the peer data transmission equipment.

Fault causes include power failure of data transmission equipment. The fault cause detecting module detects whether the voltage of the main power supply or internal power supply of the data transmission equipment falls. If the voltage falls, the fault cause is power failure of data transmission equipment.

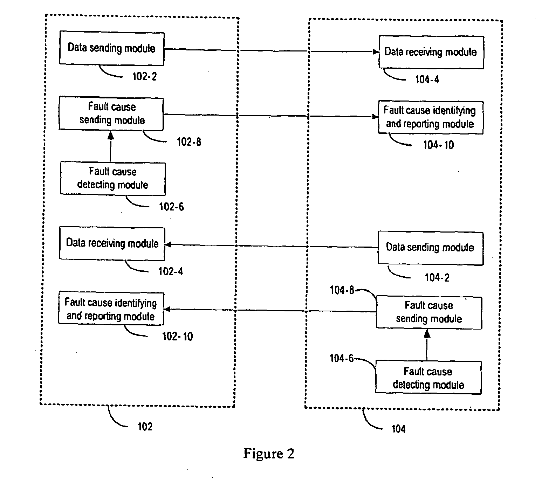

Figure 2 shows the structure of a system for detecting and reporting faults of data transmission equipment in which the fault causes are reported through a dedicated data transmitting/receiving port in an embodiment of the present invention.

As shown in Figure 2, in this embodiment of the present invention, the local data transmission equipment 102 includes a data transmitting module 102-2 and a data receiving module 102-4, and further includes:
a fault cause detecting module 102-6, adapted to detect the fault causes of the local data transmission equipment;
a fault cause sending module 102-8, adapted to send the detected fault causes and important state information of the local data transmission equipment through a dedicated port to the peer data transmission equipment through fibers, cables or RF when a fault cause is detected; and
a fault cause identifying and reporting module, adapted to: identify the fault causes and important state information from the peer data transmission equipment; and report the identified fault causes and important state information of the peer data transmission equipment to the NMS.

Likewise, in this embodiment of the present invention, the peer data transmission equipment 104 includes a data transmitting module 104-2 and a data receiving module 104-4, and further includes:
a fault cause detecting module 104-6, adapted to detect the fault causes of the data transmission equipment;
a fault cause sending module 104-8, adapted to send the detected fault causes and important state information of the local data transmission equipment through a dedicated port to the local data transmission equipment through fibers, cables or RF when a fault cause is detected; and
a fault cause identifying and reporting module 104-10, adapted to: identify the fault causes and important state information from the local data transmission equipment; and report the identified fault causes and important state information of the local data transmission equipment to the NMS.

The fault cause sending module keeps normal work through an energy conservation component or a standby power supply of the data transmission equipment. Before failure of working normally, the fault cause sending module sends out the fault causes and important state information completely. The fault cause sending module can send fault causes and important state information through a normal data transmitting port or a dedicated port of the data transmission equipment.

The fault cause sending module can send fault causes and important state information in at least one of the following modes:
sending fault causes and important state information through an operation management and maintenance channel; and
adding the fault causes and important state information into the payload, which will be transmitted to the peer data transmission equipment.

Fault causes include power failure of data transmission equipment. The fault cause detecting module detects whether the voltage of the main power supply or internal power supply of the data transmission equipment falls. If the voltage falls, the fault cause is power failure of data transmission equipment.

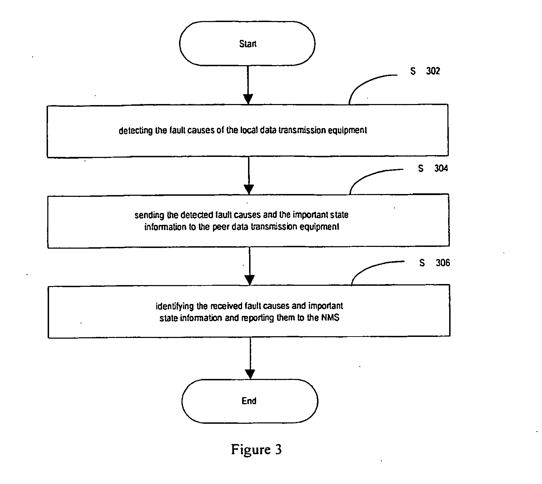

Figure 3 is a flowchart of a method for detecting and reporting faults of data transmission equipment according to an embodiment of the present invention.

As shown in Figure 3, in this embodiment of the present invention, the method for detecting and reporting faults of data transmission equipment includes the steps as described hereinafter.

Step S302: through a fault cause detecting module, detecting the fault causes of the local data transmission equipment.

Step S304: through a fault cause sending module, sending the detected fault causes and the important state information of the local data transmission equipment to the peer data transmission equipment.

Step S306: through a fault cause identifying and reporting module, identifying the fault causes and important state information from the peer data transmission equipment, and reporting the identified fault causes and important state information of the peer data transmission equipment to the NMS.

The fault cause sending module keeps normal work through an energy conservation component or a standby power supply of the data transmission equipment. Before failure of working normally, the fault cause sending module sends out the fault causes and important state information completely. The fault cause sending module can send fault causes and important state information through a normal data transmitting port or a dedicated port of the data transmission equipment.

The fault cause sending module can send fault causes and important state information in at least one of the following modes:
sending fault causes and important state information through an operation management and maintenance channel; and
adding the fault causes and important state information into the payload, which will be transmitted to the peer data transmission equipment.

The fault cause identifying and reporting module can receive fault causes and important state information through a normal data receiving port or a dedicated port of the data transmission equipment.

Fault causes include power failure of data transmission equipment. The fault cause detecting module detects whether the voltage of the main power supply or internal power supply of the data transmission equipment falls. If the voltage falls, the fault cause is power failure of data transmission equipment.

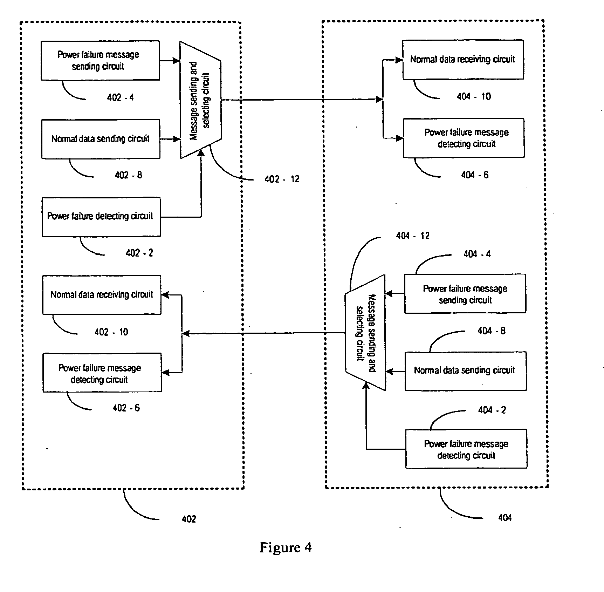

Figure 4 shows the structure of a system for detecting and reporting faults of data transmission equipment in which the fault causes (power failure) are transmitted through a normal data transmitting/receiving port according to an embodiment of the present invention.

As shown in Figure 4, both the local data transmission equipment 402 and the peer data transmission equipment 404 include normal data transmitting circuits 402-8 and 404-8 as well as normal data receiving data 402-10 and 404-10.

In the case that the fault cause is power failure of data transmission equipment, both the local data transmission equipment and the peer data transmission equipment must have power failure detecting circuits 402-2 and 404-2, which are adapted to detect the fall of supply voltage. The fall of supply voltage serves as a basis for judging imminent power failure of the network equipment.

Circuits (or software) 402-4 and 404-4 adapted to send messages must be available.

Circuits (or software) 402-6 and 404-6 adapted to receive and identify power failure messages (power failure detection) must be available.

After the power failure detecting circuit detects voltage fall, it indicates that the network equipment is about to incur power failure, and the message sending circuit (or software) can send important state information of the equipment quickly.

Messages are sent to the peer network equipment, converted by the peer network equipment, and then sent to the NMS.

When a message is sent to the NMS directly, it takes a relatively long time, and a dedicated energy conservation unit is required. When a message is sent to the peer Network Element (NE) directly, it takes much less time than being sent to the NMS directly.

The message sent upon power failure is not sent to the NMS directly, so the channel for transmitting the message can be selected flexibly, without being limited to the dedicated Operation Administration and Maintenance (OAM) channel (for example, in the case of transmitting SOH bytes of the equipment in a multi-service transfer platform). The message can also be put into the payload for transmitting.

When a voltage fall detection circuit detects voltage fall, the message sending circuit can keep working normally by using the energy conservation component, but not limited to the standby power supply, of the equipment.

The word "quickly" mentioned above means that the message of power failure of the equipment or other important information of the equipment should be sent out completely before the message sending circuit fails.

The ports for sending and receiving messages include, but are not limited to, the normal data sending and receiving port, and may be a dedicated port, which is exclusively adapted to send and receive power failure messages.

Power failure messages may be specific bit sequences, codes or data packets. Such specific bit sequences, codes and data packets have distinct features, and are easily detectible by the message detecting circuit or software. Power failure messages should be different from normally transmitted data so that the detecting circuit will not mistakenly regard the normally transmitted data as power failure messages.

Reported messages are not limited to power failure messages, and may be important state messages of other equipment.

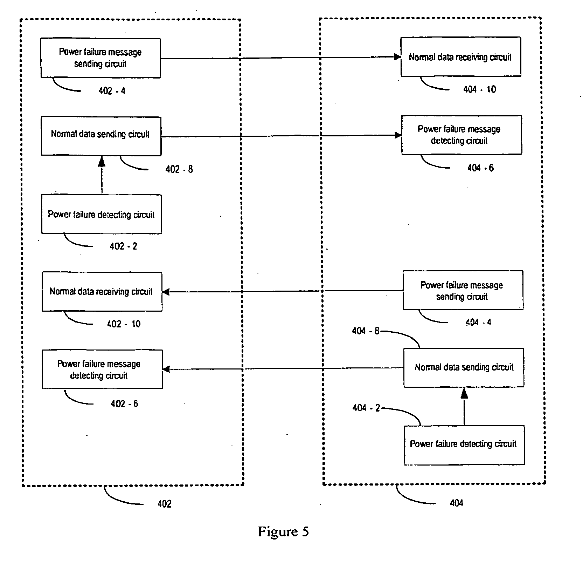

The transmission process may be the circumstance in Figure 4, in which the data port for sending/receiving power failure messages is the same as the data port for sending/receiving normal data, or the circumstance in Figure 5, in which a dedicated port is used for sending/receiving power failure messages. However, the transmission process is not limited to the previous two circumstances.

Figure 5 shows the structure of a system for detecting and reporting faults of data transmission equipment in which the fault causes (power failure) are transmitted through a dedicated port according to an embodiment of the present invention.

After the power failure detecting circuit of the local data transmission equipment 402 detects power failure of the local data transmission equipment, the power failure message sending circuit sends the power failure message through a dedicated port to the power failure message detecting circuit of the peer data transmission equipment 404 directly.

Likewise, after the power failure detecting circuit of the peer data transmission equipment detects power failure of the peer data transmission equipment, the power failure message sending circuit sends a power failure message through a dedicated port to the power failure detecting circuit of the local data transmission equipment directly.

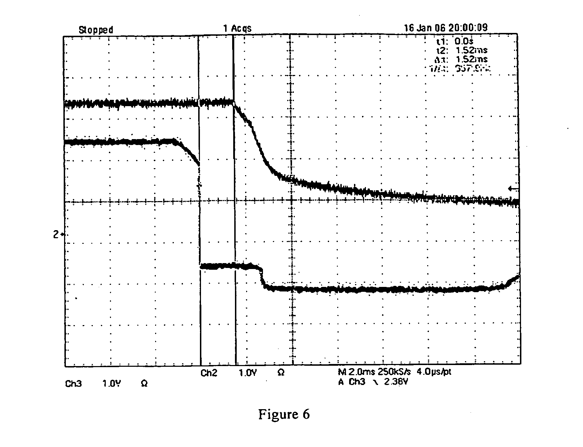

Figure 6 shows the time sequence from detecting voltage fall to main voltage failure of the system according to an embodiment of the present invention. Figure 6 is an example of time sequence of the MSTP equipment from detecting voltage fall to main voltage failure of the system in the process of detecting and reporting power failure on MSTP equipment.

The waveform in Figure 6 is the working voltage of the power failure message sending circuit, and the following waveform is the power failure signal output by the power failure detecting circuit, where low levels are effective.

The time interval from the event that the power failure detecting circuit outputs an effective power failure signal to the event that the working voltage of the message sending circuit begins falling is only about 1.5 ms. Namely, for the specific equipment, the power failure message must be sent out within 1.5 ms. On the MSTP equipment, the power supply used by the chip on a board is generally 1.2 V ∼ 3.3 V, and the power failure detection may be performed at the input 220 VAC/110 VAC or -48 VDC/24 VDC side. If the power supply is backed up in a 1+1 backup mode, the power failure detection is preferably performed at the place where the power supply is closed. In this way, the power failure detecting circuit detects the power failure of the equipment rather than the power failure of the input power supply.

For reducing costs, backup power supply for the exclusive purpose of sending power failure messages is usually lacking. The power failure message may be put into the specific byte of the SOH such as DCC byte (D1∼D12) for transmitting. After power failure is detected, the specific byte begins to send special bit sequences such as PRBS.

In order to reduce the probability of mistakenly detected power failure messages, the length of a special bit sequence should be greater than 32 bits. If a PRBS is selected for transmitting power failure messages, the selected PRBS should be different from the PRBS of ordinary instruments. In this way, the power failure message receiving circuit will not mistakenly detect the power failure message during a test performed through an instrument.

The power failure message receiving circuit detects special bit sequences, and reports NE power failure to the peer side after detecting a special bit sequence.

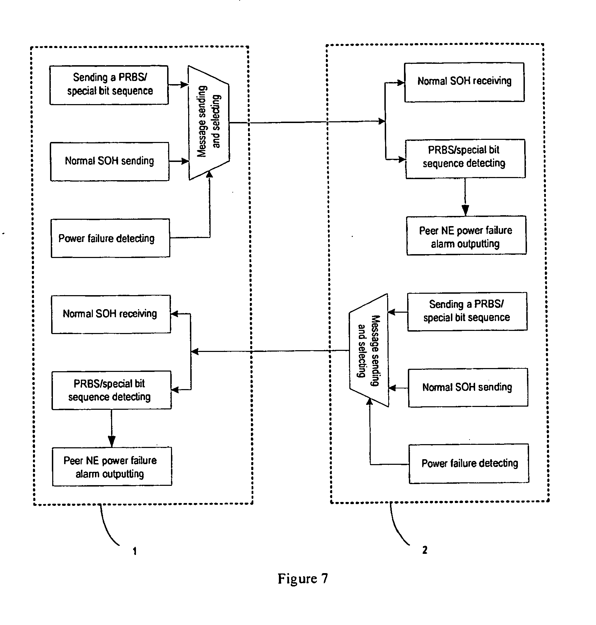

The schematic diagram is given in Figure 7. Figure 7 shows the structure of a system for detecting and reporting faults of data transmission equipment in an Ethernet according to an embodiment of the present invention.

The power failure detecting circuit of NE1 detects whether the power supply of NE1 fails. If the detection result indicates power failure, the message sending and selecting circuit selects to send a PRBS/special bit sequence, and sends out the PRBS/special bit sequence completely before the sending circuit fails. The detecting circuit of NE2 detects the PRBS/special bit sequence, and outputs the power failure alarm of NE1 to the NMS after detecting a PRBS/special bit sequence.

Likewise, the power failure detecting circuit of NE2 detects whether the power supply of NE2 fails. If the detection result indicates power failure, the message sending and selecting circuit selects to send a PRBS/special bit sequence, and sends out the PRBS/special bit sequence completely before the sending circuit fails. The detecting circuit of NE1 detects the PRBS/special bit sequence, and outputs the power failure alarm of NE2 to the NMS after detecting a PRBS/special bit sequence.

On an Ethernet device, the message that needs to be reported at the time of power failure can be encapsulated into an Ethernet packet as part of the OAM information.

Through the embodiments of the present invention, the maintainers can obtain the information about power failure of the peer communication equipment without any auxiliary communication means. In the case of service interruption, the maintainers can additionally know whether the service interruption is caused by power failure. The communication equipment is more maintainable. The message sent in the case of power failure is not reported to the NMS directly, but is sent to the peer equipment; and then the peer equipment reports the message to the NMS, which speeds up the reporting. Moreover, since the fault causes are not reported to the NMS directly, the channel of transmitting messages can be selected at discretion. It is appropriate to select the dedicated data link for transmitting NMS messages (for example, transmitting DCC bytes of the MSTP equipment), or select the data link previously used for data transmission (for example, transmitting various payloads of the MSTP equipment such as VC4, VC3, and VC12).

The embodiments described above are only better ones of this invention, and they are not meant to confine the protection scope of this invention. The technicians in this field may make various changes and variations to the present invention. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for detecting and reporting faults of data transmission equipment, wherein a local data transmission equipment (102, 402) detects fault causes of the local data transmission equipment (102,402),
the method comprising:
sending, by the local data transmission equipment (102, 402), the detected fault causes and important state information of the local data transmission equipment (102, 402) to a peer data transmission equipment (104, 404);
the method being **characterized by**
when detecting voltage fall, by the local data transmission equipment (102, 402), sending the detected fault causes and the important state information of the local data transmission equipment (102, 402) to the peer data transmission equipment (104, 404) before failure of normal working of the local data transmission equipment (102, 402); wherein sending the detected fault causes and the important state information of the local data transmission equipment to the peer data transmission equipment further comprises: adding the fault causes and important state information into the payload, which will be sent to the peer data transmission equipment; and
identifying, by the peer data transmission equipment (104, 404), the received fault causes and the important state information, and
reporting, by the peer data transmission equipment (104, 404), the identified fault causes and the important state information of the local data transmission equipment (102, 402) to a Network Management System, NMS.

2. The method of claim 1, wherein, sending the detected fault causes and the important state information of the local data transmission equipment to the peer data transmission equipment completely.

3. The method of claim 1 or 2, wherein the procedure of sending the detected fault causes and the important state information of the local data transmission equipment to the peer data transmission equipment comprises:
sending fault causes and important state information to the general data receiving port and/or dedicated data receiving port of the peer data transmission equipment through an Operation Administration and Maintenance, OAM, channel, general data sending port and/or dedicated data sending port of the local data transmission equipment.

4. The method according to one of claims 1 to 3, further comprising:
detecting whether the voltage of the main power supply and/or internal power supply of the local data transmission equipment falls, when voltage fall is detected, it indicates the network equipment is about to incur power failure.

5. The method of claim 1 or 4, further comprising:
detecting whether the voltage of the main power supply and/or internal power supply of the local data transmission equipment falls; if the voltage falls, the fault cause is power failure of the local data transmission equipment.

6. A data transmission equipment (102, 402) comprising a fault cause detecting module (102-6, 104-6, 402-6), adapted to detect the fault causes of the data transmission equipment (102, 402);
the equipment (102, 402) comprising:
a fault cause sending module (102-8, 104-8, 402-4), adapted to send the detected fault causes and the important state information of the data transmission equipment to a peer data transmission equipment (104, 404);
wherein the equipment is **characterized by**
when the fault cause detecting module (102-6, 104-6, 402-6) detects voltage fall, the fault cause sending module (102-8, 104-8, 402-4) is further adapted to send the detected fault causes and the important state information of the data transmission equipment (102, 402) to the peer data transmission equipment (104, 404) before failure of normal working of the data transmission equipment (102, 402); and wherein
the input side of the fault cause sending module further inputs the payload transmitted to the peer data transmission equipment, and the fault cause sending module adds the fault causes and important state information into the payload which will be sent to the peer data transmission equipment.

7. The data transmission equipment of claim 6, further comprising a sending power supply, adapted to supply power to the fault cause sending module to maintain normal working, wherein when the fault cause detecting module detects voltage fall, the fault cause sending module sends out the fault causes and the important state information before the sending power supply stops supplying power.

8. The data transmission equipment of claim 7, wherein the sending power supply comprises an energy conservation component and/or a standby power supply of the data transmission equipment.

9. The data transmission equipment of claim 7, wherein the fault cause detecting module further comprises:
an input unit, adapted to output voltage of the main power supply and/or internal power supply through connection with the main power supply and/or internal power supply of the data transmission equipment; and
a judging unit, adapted to output the information indicating that the fault cause is power failure of the data transmission equipment if the voltage of the main power supply and/or internal power supply falls.

10. The data transmission equipment of claim 7, wherein the output side of the fault cause sending module is connected with an Operation Administration and Maintenance, OAM, channel, the general data sending port and/or the dedicated data sending port of the data transmission equipment.

11. A system for detecting and reporting faults of data transmission equipment comprising a local data transmission equipment according to one of claims 6-10,
**characterized in that** the system further comprises:
a peer data transmission equipment (104, 404), adapted to identify the received fault causes and the important state information of the local data transmission equipment (102, 402), and report them to a Network Management System, NMS.

12. The system of claim 11, wherein the second data transmission equipment further comprises:
a peer fault cause identifying unit (104-10), adapted to identify the received fault causes and important state information of the peer data transmission equipment (104, 404); and
a reporting unit (104-10), adapted to report the identified fault causes and important state information of the peer data transmission equipment (104, 404) to the NMS.

13. The system of claim 12, wherein the input side of the peer fault cause identifying unit is connected with the general data receiving port and/or the dedicated data receiving port of the first data transmission equipment (102, 402).

## Patentansprüche

1. Verfahren zum Erkennen und Melden von Fehlern von Datenübertragungsgeräten, wobei ein lokales Datenübertragungsgerät (102, 402) Fehlerursachen des lokalen Datenübertragungsgeräts (102, 402) erkennt,
wobei das Verfahren die folgenden Schritte umfasst:
Senden der erkannten Fehlerursachen und wichtiger Zustandsinformationen des lokalen Datenübertragungsgeräts (102, 402) durch das lokale Datenübertragungsgerät (102, 402) zu einem Peer-Datenübertragungsgerät (104, 404);
wobei das Verfahren durch die folgenden Schritte **gekennzeichnet** ist:
Senden der erkannten Fehlerursachen und der wichtigen Zustandsinformationen des lokalen Datenübertragungsgeräts (102, 402) durch das lokale Datenübertragungsgerät (102, 402) zu dem Peer-Datenübertragungsgerät (104, 404) beim Erkennen eines Spannungsabfalls vor dem Ausfall der normalen Arbeitsweise des lokalen Datenübertragungsgeräts (102, 402); wobei das Senden der erkannten Fehlerursachen und der wichtigen Zustandsinformationen des lokalen Datenübertragungsgeräts zu dem Peer-Datenübertragungsgerät ferner Folgendes umfasst: Hinzufügen der Fehlerursachen und wichtigen Zustandsinformationen zu den Nutzinformationen, die zu dem Peer-Datenübertragungsgerät gesendet werden; und
Identifizieren der empfangenen Fehlerursachen und der wichtigen Zustandsinformationen durch das Peer-Datenübertragungsgerät (104, 404) und Melden der identifizierten Fehlerursachen und der wichtigen Zustandsinformationen des lokalen Datenübertragungsgeräts (102, 402) durch das Peer-Datenübertragungsgerät (104, 404) an ein Netzwerkverwaltungssystem NMS.

2. Verfahren nach Anspruch 1, wobei die erkannten Fehlerursachen und die wichtigen Zustandsinformationen des lokalen Datenübertragungsgeräts vollständig zu dem Peer-Datenübertragungsgerät gesendet werden.

3. Verfahren nach Anspruch 1 oder 2, wobei die Prozedur des Sendens der erkannten Fehlerursachen und der wichtigen Zustandsinformationen des lokalen Datenübertragungsgeräts zu dem Peer-Datenübertragungsgerät Folgendes umfasst:
Senden von Fehlerursachen und wichtigen Zustandsinformationen zu dem allgemeinen Datenempfangsport und/oder dedizierten Datenempfangsport des Peer-Datenübertragungsgeräts durch einen allgemeinen Datensendeport und/oder dedizierten Datensendeport des Kanals der Operation Administration and Maintenance OAM des lokalen Datenübertragungsgeräts.

4. Verfahren nach einem der Ansprüche 1 bis 3, ferner mit dem folgenden Schritt:
Erkennen, ob die Spannung der Hauptstromversorgung und/oder internen Stromversorgung des lokalen Datenübertragungsgeräts abfällt, wobei, wenn ein Spannungsabfall erkannt wird, er anzeigt, dass ein Ausfall der Stromversorgung des Netzwerkgeräts bevorsteht.

5. Verfahren nach Anspruch 1 oder 4, ferner mit dem folgenden Schritt:
Erkennen, ob die Spannung der Hauptstromversorgung und/oder internen Stromversorgung des lokalen Datenübertragungsgeräts abfällt, wobei, wenn die Spannung abfällt, die Fehlerursache ein Ausfall der Stromversorgung des lokalen Datenübertragungsgeräts ist.

6. Datenübertragungsgerät (102, 402) mit einem Fehlerursachen-Erkennungsmodul (102-6, 104-6, 402-6), das dafür ausgelegt ist, die Fehlerursachen des Datenübertragungsgeräts (102, 402) zu erkennen;
wobei das Gerät (102, 402) Folgendes umfasst:
ein Fehlerursachen-Sendemodul (102-8, 104-8, 402-4), das dafür ausgelegt ist, die erkannten Fehlerursachen und die wichtigen Zustandsinformationen des Datenübertragungsgeräts zu einem Peer-Datenübertragungsgerät (104, 404) zu senden;
wobei das Gerät durch Folgendes **gekennzeichnet** ist:
wenn das Fehlerursachen-Erkennungsmodul (102-6, 104-6, 402-6) einen Spannungsabfall erkennt, ist das Fehlerursachen-Sendemodul (102-8, 104-8, 402-4) ferner dafür ausgelegt, die erkannten Fehlerursachen und die wichtigen Zustandsinformationen des Datenübertragungsgeräts (102, 402) vor dem Ausfall der normalen Arbeitsweise des Datenübertragungsgeräts (102, 402) zu dem Peer-Datenübertragungsgerät (104, 404) zu senden; und wobei
die Eingangsseite des Fehlerursachen-Sendemoduls ferner die zu dem Peer-Datenübertragungsgerät übertragenen Nutzinformationen eingibt und das Fehlerursachen-Sendemodul die Fehlerursachen und wichtigen Zustandsinformationen zu den Nutzinformationen hinzufügt, die zu dem Peer-Datenübertragungsgerät gesendet werden.

7. Datenübertragungsgerät nach Anspruch 6, ferner mit einer Sendestromversorgung, die dafür ausgelegt ist, das Fehlerursachen-Sendemodul mit Strom zu versorgen, um die normale Arbeitsweise aufrechtzuerhalten, wobei, wenn das Fehlerursachen-Erkennungsmodul einen Spannungsabfall erkennt, das Fehlerursachen-Sendemodul die Fehlerursachen und die wichtigen Zustandsinformationen heraussendet, bevor die Sendestromversorgung mit der Stromversorgung aufhört.

8. Datenübertragungsgerät nach Anspruch 7, wobei die Sendestromversorgung eine Energieerhaltungskomponente und/oder eine Standby-Stromversorgung des Datenübertragungsgeräts umfasst.

9. Datenübertragungsgerät nach Anspruch 7, wobei das Fehlerursachen-Erkennungsmodul ferner Folgendes umfasst:
eine Eingabeeinheit, die dafür ausgelegt ist, durch Verbindung mit der Hauptstromversorgung und/oder internen Stromversorgung des Datenübertragungsgeräts die Spannung der Hauptstromversorgung und/oder internen Stromversorgung auszugeben; und
eine Beurteilungseinheit, die dafür ausgelegt ist, die Informationen, die anzeigen, dass die Fehlerursache Ausfall der Stromversorgung des Datenübertragungsgeräts ist, auszugeben, wenn die Spannung der Hauptstromversorgung und/oder internen Stromversorgung abfällt.

10. Datenübertragungsgerät nach Anspruch 7, wobei die Ausgangsseite des Fehlerursachen-Sendemoduls mit einem Kanal der Operation Administration and Maintenance OAM, dem allgemeinen Datensendeport und/oder dem dedizierten Datensendeport des Datenübertragungsgeräts verbunden ist.

11. System zum Erkennen und Melden von Fehlern von Datenübertragungsgeräten mit einem lokalen Datenübertragungsgerät nach einem der Ansprüche 6-10,
**dadurch gekennzeichnet, dass** das System ferner Folgendes umfasst:
ein Peer-Datenübertragungsgerät (104, 404), das dafür ausgelegt ist, die empfangenen Fehlerursachen und die wichtigen Zustandsinformationen des lokalen Datenübertragungsgeräts (102, 402) zu identifizieren und diese an ein Netzwerkverwaltungssystem NMS zu melden.

12. System nach Anspruch 11, wobei das zweite Datenübertragungsgerät ferner Folgendes umfasst:
eine Peer-Fehlerursachen-Identifizierungseinheit (104-10), die dafür ausgelegt ist, die empfangenen Fehlerursachen und wichtigen Zustandsinformationen des Peer-Datenübertragungsgeräts (104, 404) zu identifizieren; und
eine Meldeeinheit (104-10), die dafür ausgelegt ist, die identifizierten Fehlerursachen und wichtigen Zustandsinformationen des Peer-Datenübertragungsgeräts (104, 404) an das NMS zu melden.

13. System nach Anspruch 12, wobei die Eingangsseite der Peer-Fehlerursachen-Identifizierungseinheit mit dem allgemeinen Datenempfangsport und/oder dem dedizierten Datenempfangsport des ersten Datenübertragungsgeräts (102, 402) verbunden ist.

## Revendications

1. Procédé de détection et de communication de pannes d'un équipement de transmission de données, dans lequel un équipement de transmission de données local (102, 402) détecte des causes de pannes de l'équipement de transmission de données local (102, 402),
le procédé comprenant :
l'envoi, par l'équipement de transmission de données local (102, 402) des causes de pannes détectées et d'informations d'état importantes de l'équipement de transmission de données local (102, 402) à un équipement de transmission de données homologue (104, 404) ;
le procédé étant **caractérisé par**
à la détection d'une chute de tension, par l'équipement de transmission de données local (102, 402), l'envoi des causes de pannes détectées et des informations d'état importantes de l'équipement de transmission de données local (102, 402) à l'équipement de transmission de données homologue (104, 404) avant la défaillance du fonctionnement normal de l'équipement de transmission de données local (102, 402) ; l'envoi des causes de pannes détectées et des informations d'état importantes de l'équipement de transmission de données local à l'équipement de transmission de données homologue comprenant en outre : l'ajout des causes de pannes et des informations d'état importantes à la charge utile, laquelle sera envoyée à l'équipement de transmission de données homologue ; et
l'identification, par l'équipement de transmission de données homologue (104, 404) des causes de pannes et des informations d'état importantes reçues ; et
la communication, par l'équipement de transmission de données homologue (104, 404), des causes de pannes identifiées et des informations d'état importantes de l'équipement de transmission de données local (102, 402) à un Système de Gestion de Réseau, (NMS).

2. Procédé selon la revendication 1, comprenant l'envoi complet des causes de pannes détectées et des informations d'état importantes de l'équipement de transmission de données local à l'équipement de transmission de données homologue.

3. Procédé selon la revendication 1 ou 2, dans lequel la procédure d'envoi des causes de pannes détectées et des informations d'état importantes de l'équipement de transmission de données local à l'équipement de transmission de données homologue comprend :
l'envoi des causes de pannes et informations d'état importantes au port de réception de données général et/ou au port de réception de données dédié de l'équipement de transmission de données homologue par le biais d'un canal d'Opération, Administration et Maintenance, OAM, d'un port d'envoi de données général et/ou d'un port d'envoi de données dédié de l'équipement de transmission de données local.

4. Procédé selon l'une des revendications 1 à 3, comprenant en outre :
la détection si la tension de l'alimentation électrique principale et/ou de l'alimentation électrique interne de l'équipement de transmission de données local chute ou non, une chute de tension détectée indiquant que l'équipement de réseau est sur le point d'encourir une défaillance de puissance.

5. Procédé selon la revendication 1 ou 4, comprenant en outre :
la détection si la tension de l'alimentation électrique principale et/ou de l'alimentation électrique interne de l'équipement de transmission de données local chute ou non, une chute de tension ayant pour cause de défaillance la défaillance de puissance de l'équipement de transmission de données local.

6. Equipement de transmission de données (102, 402) comprenant un module de détection de causes de pannes (102-6, 104-6, 402-6), adapté pour détecter les causes de pannes de l'équipement de transmission de données (102, 402) ;
l'équipement (102,402) comprenant :
un module d'envoi de causes de pannes (102-8, 104-8, 402-4), adapté pour envoyer les causes de pannes détectées et les informations d'état importantes de l'équipement de transmission de données à un équipement de transmission de données homologue (104,404);
dans lequel l'équipement est **caractérisé par**
quand le module de détection de causes de pannes (102-6, 104-6, 402-6) détecte une chute de tension, le module d'envoi de causes de pannes (102-8, 104-8, 402-4) est adapté en outre pour envoyer les causes de pannes détectées et les informations d'état importantes de l'équipement de transmission de données (102, 402) à l'équipement de transmission de données homologue (104, 404) avant la défaillance du fonctionnement normal de l'équipement de transmission de données (102, 402) ; et dans lequel
le côté d'entrée du module d'envoi de causes de pannes entre en outre la charge utile transmise à l'équipement de transmission de données homologue, et le module d'envoi de causes de pannes ajoute les causes de pannes et informations d'état importantes à la charge utile qui sera envoyée à l'équipement de transmission de données homologue.

7. Equipement de transmission de données selon la revendication 6, comprenant en outre une alimentation électrique d'envoi, adaptée pour fournir une puissance au module d'envoi de causes de pannes afin de maintenir un fonctionnement normal, dans lequel quand le module de détection de causes de pannes détecte une chute de tension, le module d'envoi de causes de pannes envoie les causes de pannes et les informations d'état importantes avant que l'alimentation électrique d'envoi ne cesse de fournir la puissance.

8. Equipement de transmission de données selon la revendication 7, dans lequel l'alimentation électrique d'envoi comprend un composant de conservation d'énergie et/ou une alimentation électrique de secours de l'équipement de transmission de données.

9. Equipement de transmission de données selon la revendication 7, dans lequel le module de détection de causes de pannes comprend en outre :
une unité d'entrée, adaptée pour sortir une tension de l'alimentation électrique principale et/ou de l'alimentation électrique interne par le biais d'une connexion avec l'alimentation électrique principale et/ou l'alimentation électrique interne de l'équipement de transmission de données ; et
une unité de jugement, adaptée pour produire en sortie les informations indiquant que la cause de la panne est une défaillance de puissance de l'équipement de transmission de données si la tension de l'alimentation électrique principale et/ou l'alimentation électrique interne tombe en panne.

10. Equipement de transmission de données selon la revendication 7, dans lequel le côté de sortie du module d'envoi de causes de pannes est connecté à un canal d'Opération, Administration et Maintenance, OAM, au port d'envoi de données général et/ou au port d'envoi de données dédié de l'équipement de transmission de données.

11. Système de détection et de communication de pannes d'un équipement de transmission de données comprenant un équipement de transmission de données local selon l'une des revendications 6 à 10,
**caractérisé en ce que** le système comprend en outre :
un équipement de transmission de données homologue (104, 404) adapté pour identifier les causes de pannes et informations d'état importantes reçues de l'équipement de transmission de données local (102, 402) et les communiquer à un Système de Gestion de Réseau, (NMS).

12. Système selon la revendication 11, dans lequel, le second équipement de transmission de données comprend en outre :
une unité d'identification de causes de pannes homologue (104-10), adaptée pour identifier les causes de pannes et informations d'état importantes reçues de l'équipement de transmission de données homologue (104, 404) ; et
une unité de communication (104-10), adaptée pour communiquer les causes de pannes et informations d'état importantes identifiées de l'équipement de transmission de données homologue (104, 404) au NMS.

13. Système selon la revendication 12, dans lequel le côté d'entrée de l'unité d'identification de causes de pannes homologue est connecté au port de réception de données général et/ou au port de réception de données dédié du premier équipement de transmission de données (102, 402).
